(19) Europäisches Patentamt
European Patent Office
Office européen des brevets

(11) Veröffentlichungsnummer: **0 105 146**
**B1**

# (12) EUROPÄISCHE PATENTSCHRIFT

(45) Veröffentlichungstag der Patentschrift: **18.12.85**

(51) Int. Cl.⁴: **C 07 C 85/24,** C 07 C 87/50 // C07C119/048

(21) Anmeldenummer: **83108026.2**

(22) Anmeldetag: **13.08.83**

## (54) Verfahren zur Herstellung von Diaminen oder Diamingemischen.

(30) Priorität: **27.08.82 DE 3231911**

(43) Veröffentlichungstag der Anmeldung: **11.04.84 Patentblatt 84/15**

(45) Bekanntmachung des Hinweises auf die Patenterteilung: **18.12.85 Patentblatt 85/51**

(84) Benannte Vertragsstaaten: **BE CH DE FR GB IT LI**

(56) Entgegenhaltungen:
**EP - A - 0 024 665**
**FR - A - 2 359 115**
**US - A - 2 511 028**

(73) Patentinhaber: **BAYER AG, Konzernverwaltung RP Patentabteilung, D-5090 Leverkusen 1 Bayerwerk (DE)**

(72) Erfinder: **Knöfel, Hartmut, Dr., Duelmener Weg 21, D-5068 Odenthal (DE)**
Erfinder: **Brockelt, Michael, Neuenhauser Weg 21, D-5060 Bergisch-Gladbach (DE)**
Erfinder: **Penninger, Stefan, Dr., Pommernallee 5, D-4047 Dormagen 1 (DE)**

**EP 0 105 146 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung von neuen, am aromatischen Ring mono- oder disubstituierten, diprimären Aminocyclohexylmetanilien, die ggf. Isomerengemische darstellen und/oder die ggf. im Gemisch mit untergeordneten Mengen an den entsprechenden unhydrierten bzw. perhydrierten Diaminen vorliegen können durch katalytische Teilhydrierung der ihnen zugrundeliegenden aromatischen Diamine.

Unsubstituierte oder an beiden Ringen substituierte Aminocyclohexylalkylaniline sind aus der US-PS Nr. 2511028 bereits bekannt. Sie eignen sich beispielsweise als Zwischenprodukte zur Herstellung von Farbstoffen, Kautschuk-Hilfsmitteln, oberflächenaktiven Substanzen, Polyamiden, Polyesterpolyamiden oder als Korrosionsschutzmittel. Gemäss der Lehre der genannten Vorveröffentlichung werden die Verbindungen durch katalytische Teilhydrierung der ihnen zugrundeliegenden aromatischen Diamine hergestellt. Dieses Verfahren ist jedoch mit dem Nachteil behaftet, dass die asymmetrische Hydrierung der Diaminodiphenylalkane nicht selektiv durchführbar ist, so dass die Ausbeute der genannten teilhydrierten Diamine, wie den Ausführungsbeispielen der Vorveröffentlichung zu entnehmen ist, max. nur wenig über 50% der Theorie beträgt.

Da die primären Aminocyclohexylmethylaniline nicht nur wertvolle Zwischenprodukte für die bereits genannten Einsatzgebiete, sondern insbesondere auch interessante Kettenverlängerungsmittel mit Aminogruppen abgestufter Reaktivität für die Polyurethanchemie darstellen, bestand die der vorliegenden Erfindung zugrundeliegende Aufgabe darin, neue derartige Verbindungen aufzufinden, deren Aminogruppen, bedingt durch die zusätzliche Substitution am aromatischen Ring einen höheren Reaktivitätsunterschied aufweisen und deren Herstellung, bedingt durch die asymmetrische Substitution, mit höheren Selektivitäten gelingt.

Diese Aufgabe konnte durch die Bereitstellung des nachstehend näher beschriebenen erfindungsgemässen Verfahrens gelöst werden.

Gegenstand der Erfindung ist ein Verfahren zur Herstellung von ggf. Isomerengemische darstellenden und ggf. mit bis zu 35 Gew.-%, bezogen auf Gesamtgemisch, an den entsprechenden perhydrierten Diaminen und/oder mit bis zu 10 Gew.-%, bezogen auf Gesamtgemisch an den entsprechenden unhydrierten Diaminen vorliegenden Diaminen der allgemeinen Formel

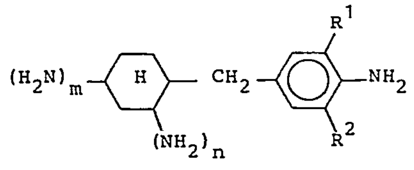

in welcher:

$R^1$ und $R^2$ jeweils gleich oder verschieden sind und Wasserstoff oder (ggf. verzweigte) Alkylgruppen mit 1 bis 12 Kohlenstoffatomen bedeuten mit der Massgabe, dass mindestens einer der Reste $R^1$ und $R^2$ für einen Alkylrest steht, und

m und n jeweils für 0 oder 1 steht, mit der Massgabe, dass die Summe m + n den Wert 1 ergibt, wobei im Falle von m oder n = 0 die freie Valenz durch Wasserstoff abgesättigt ist,

dadurch gekennzeichnet, dass man ggf. als Isomerengemische vorliegende, aromatische Diamine der Formel

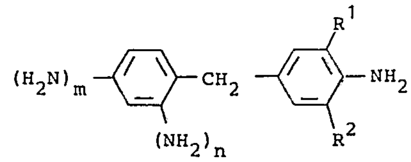

unter Anlagerung von 3 mol Wasserstoff pro Mol Diamin katalytisch hydriert, wobei

$R^1$, $R^2$, m und n die oben genannte Bedeutung haben.

Die für das erfindungsgemässe Verfahren als Ausgangsmaterial geeigneten aromatischen Diamine der o. g. allgemeinen Formel können sowohl reine Substanzen als auch Isomerengemische darstellen. Besonders gut geeignet sind die dieser Formel enstprechenden Diamine, für welche entweder,

$R^1$ und $R^2$ jeweils für gleiche oder verschiedene Reste stehen und (ggf. verzweigte) Alkylreste mit 1 bis 4 Kohlenstoffatomen, insbesondere Methylgruppen, bedeuten, oder für welche

$R^1$ für einen Alkyrest mit 1 bis 4 Kohlenstoffatomen, insbesondere eine Methylgruppe, steht und

$R^2$ für Wasserstoff steht.

Beispiele für erfindungsgemäss als Ausgangsmaterial geeignete aromatische Diamine sind die der allgemeinen Formel

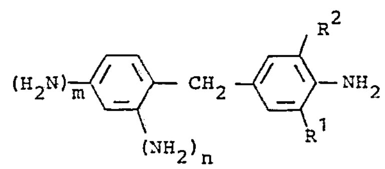

entsprechenden Diamine, wie sie durch Arylamin/Formaldehyd-Kondensation unter Verwendung eines Gemischs aus Anilin und substituierten Anilinen der Formel

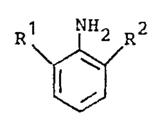

als Arylamin gemäss DE-A Nrn. 2133870, 2149998, 2700185 oder durch Reaktion von o-Nitrobenzylhalogeniden mit substituierten Anilinen der o. g. Formel, Reduktion der Nitrogruppe und anschliessende Umlagerung gemäss BE-PS Nr. 864533 oder GB-PS Nr. 1567114 zugänglich sind.

Bevorzugte beim erfindungsgemässen Verfahren einzusetzende Ausgangsmaterialien sind
4,2'-Diamino-3,5-dimethyldiphenylmethan,
4,2'-Diamino-3,5-diethyldiphenylmethan,

4,2'-Diamino-3,5-diisopropyldiphenylmethan,
4,2'-Diamino-3-ethyl-5-methyldiphenylmethan,
sowie diese Verbindungen als wesentliche Komponente enthaltende Isomerengemische,
4,4'-Diamino-3,5-dimethyldiphenylmethan,
4,4'-Diamino-3,5-diethyldiphenylmethan,
4,4'-Diamino-3,5-diisopropyldiphenylmethan,
4,4'-Diamino-3-ethyl-5-methyldiphenylmethan,
sowie diese Verbindungen als wesentliche Komponente enthaltende Isomerengemische,
4,2'-Diamino-3-methyldiphenylmethan,
4,2'-Diamino-3-ethyldiphenylmethan,
4,2'-Diamino-3-isopropyldiphenylmethan, sowie deren Gemische mit den entsprechenden,
4,4'-Diamino-3-alkyl- bzw. 2,4'-Diamino-3-alkyldiphenylmethanen,
4,4'-Diamino-3-methyldiphenylmethan,
4,4'-Diamino-3-ethyldiphenylmethan,
4,4'-Diamino-3-isopropyldiphenylmethan und deren Gemische mit anderen Stellungsisomeren wie z. B. den entsprechenden,
4,2'-Diamino-3-alkyldiphenylmethanen,
und/oder
2,4'-Diamino-3-alkyldiphenylmethanen.

Bei der Durchführung des erfindungsgemässen Verfahrens werden die als Ausgangsmaterial einzusetzenden aromatischen Diamine unter Anlagerung von 3 mol Wasserstoff pro Mol Diamin katalytisch hydriert. Dies bedeutet, dass die Hydrierungsreaktion vorzugsweise nach Verbrauch von 3 mol Wasserstoff pro Mol an Ausgangsverbindung abgebrochen wird. Die Hydrierung erfolgt bei 20 bis 300° C, vorzugsweise 70 bis 300° C uns insbesondere 120 bis 250° C unter einem Druck von 20 bis 300 bar, vorzugsweise 70 bis 300 bar und insbesondere 120 bis 250 bar. Wie aus NMR-spektroskopischen Untersuchungen der Hydrierungsprodukte hervorgeht, bestehen die teilhydrierten H6-Diamine praktisch ausschliesslich aus solchen Diaminen, deren Alkylsubstituenten am verbleibenden aromatischen Ring fixiert sind.

Die erfindungsgemässe Hydrierungsreaktion erfolgt in Gegenwart von 0,1 bis 10 Gew.-%, vorzugsweise von 0,1 bis 1 Gew.-%, bezogen auf katalytisch wirksames Metall einerseits und Diaminoverbindung andererseits, eines Hydrierungskatalysators. Geeignete Katalysatoren sind beispielsweise, ggf. auf inerten Trägern wie Aktivkohle, Kieselgel und insbesondere Aluminiumoxid vorliegende Elemente der 8. Nebengruppe des Periodensystems der Elemente oder katalytisch wirksame anorganische Verbindungen dieser Elemente. Besonders gut geeignet sind z. B. Ruthenium-, Platin-, Rhodium-, Nickel- und/oder Kobaltkatalysatoren in elementarer oder chemisch gebundener Form. Besonders bevorzugt werden Ruthenium oder katalytisch wirksame Rutheniumverbindungen eingesetzt. Beispiele geeigneter Rutheniumverbindungen sind Rutheniumdioxid, Rutheniumtetroxid, Bariumperruthenit, Natrium-, Kalium-, Silber-, Calcium- oder Magnesiumruthenat, Natriumperruthenat, Rutheniumpentafluorid, Rutheniumtetrafluoridhydrat oder Rutheniumtrichlorid. Falls Trägersubstanzen für die Katalysatoren mitverwendet werden, beträgt der Metallgehalt des Trägerkatalysators im allgemeinen 1 bis 10 Gew.-%, vorzugsweise 1 bis 5 Gew.-%. Im übrigen ist selbstverständlich die Art und Menge des einzusetzenden Katalysators keineswegs erfindungswesentlich, da die Hydrierungsreaktion nach den an sich bekannten Methoden des Standes der Technik erfolgt.

Es ist oft zweckmässig, die erfindungsgemässe Hydrierungsreaktion in Gegenwart von Ammoniak durchzuführen, da Ammoniak unerwünschte Desaminierungsreaktionen und die Bildung von sekundären Aminen als Nebenprodukte unterdrückt. Falls Ammoniak mitverwendet wird, geschieht dies in Mengen von 0,1 bis 30 Gew.-%, vorzugsweise 5 bis 10 Gew.-%, bezogen auf zu hydrierende Ausgangsmateralien.

Das erfindungsgemässe Verfahren kann lösungsmittelfrei oder in Gegenwart inerter Lösungsmittel durchgeführt werden. Im allgemeinen werden niedrigschmelzende bzw. flüssige Diamine in Substanz, hochschmelzende Diamine dagegen in gelöster Form hydriert. Als Lösungsmittel eignen sich unter den Reaktionsbedingungen inerte organische Verbindungen mit niedrigem Siedepunkt, vorzugsweise Alkohole wie Methanol, Ethanol, n-Propanol- i-Propanol oder Ether wie z. B. Dioxan, Tetrahydrofuran oder Diethylether oder Kohlenwasserstoffe wie Cyclohexan. Die Durchführung des erfindungsgemässen Verfahrens findet kontinuierlich in einem Reaktionsrohr, einer Druckkesselkaskade oder vorzugsweise diskontinuierlich in einem Rührautoklaven statt, indem man den Autoklaven mit Katalysator, der zu hydrierenden Substanz und ggf. einem Lösungsmittel beschickt, mehrmals mit Inertgas spült und ggf. Ammoniak zudosiert. Danach drückt man Wasserstoff auf, bringt das Gemisch auf Reaktionstemperatur und hydriert, bis die theoretisch erforderliche Wasserstoffmenge absorbiert ist. Nach Abkühlung des Reaktionsgemischs und Abtrennung des Katalysators kann das Verfahrensprodukt destillativ aufgearbeitet werden.

Wie bereits oben ausgeführt ist der wesentliche Vorteil des erfindungsgemässen Verfahrens gegenüber dem Verfahren der US-PS Nr. 2511028 darin zu sehen, dass die Teilhydrierung mit einer erhöhten Selektivität erfolgt, so dass wesentlich höhere Ausbeuten an den eingesetzten Ausgangsmaterialien entsprechenden, Aminocyclohexylmethylanilinen erhalten werden. Im allgemeinen liegen in den beim erfindungsgemässen Verfahren anfallenden Reaktionsgemischen, bezogen auf die Gesamtmenge der Diamine, weniger als 35 Gew.-%, vorzugsweise weniger als 20 Gew.-%, an perhydrierten cycloaliphatischen Diaminen und weniger als 10 Gew.-%, vorzugsweise weniger als 5 Gew.-% an unhydrierten aromatischen Diaminen vor. Das Hauptprodukt besteht im allgemeinen aus dem angestrebten teilhydrierten, cycloaliphatischen-aromatischen Diamin. Diese erfindungsgemässen Diamine stellen im allgemeinen Isomerengemische dar und entsprechen bezüglich der Stellungsisomerie weitgehend den eingesetzten Ausgangsmaterialien. Ausserdem liegen im allgemeinen stereoisomere Verbindungen im anfallenden Reaktionsgemisch vor. Eine Auftrennung in die einzelnen Stellungs- und Stereoisomeren ist im allgemeinen bezüglich der technischen Verwertbarkeit der erfindungsgemässen Verfahrensprodukte nicht erforderlich, da es, insbesondere bei der bevorzugten Verwendung der erfindungsgemässen Verfahrensprodukte als Kettenverlängerungsmittel in der Polyurethanchemie mit abgestufter Reaktivität keineswegs auf die Stellungs- bzw. Stereoisomerie, sondern ausschliesslich darauf ankommt, dass die Hauptkomponente des Diamingemisches aus teilhydrierten Aminocyclohexylmethylanilinen besteht.

Die nachfolgenden beispiele dienen der weiteren Erläuterung der Erfindung. Alle Prozentangaben beziehen sich, soweit nichts anderslautendes vermerkt, auf Gewichtsprozente.

*Beispiele 1 bis 4:*

250 g 4,4'-Diamino-3,5-dialkyldiphenylmethan und 25 g Ruthenium Trägerkatalysator (5% Ru auf $Al_2O_3$) werden in einem 0,7 l Rührautoklaven vorgelegt und nach mehrmaligem Spülen mit Stickstoff und Wasserstoff werden 25 g Ammoniak zudosiert. Man erhitzt unter Rühren auf 140° C und hydriert bei 200 bar, bis 3,5 mol Wasserstoff absorbiert sind. Danach lässt man abkühlen, entspannt den Autoklaven und löst das Rohprodukt in Methanol auf. Der Katalysator wird abfiltriert, mit Methanol gewaschen und die organischen Lösungen vereinigt. Nach Abdampfen des Lösungsmittels wird das Produkte bei 100-190° C/0,1 mbar einer Flashdestillation unterworfen und gaschromatographisch analysiert.

Folgende Ausbeuten wurden ermittelt:

*Tabelle 1*

| Beispiel Nr. | Alkylreste | Hydrierzeit (h) | Ausbeute undefinierte Diamine (g) [% d.Th.] | Mono 1) (g) [% d.Th.] | $H_{12}$ 2) (g) [% d.Th.] | $H_6$ 3) (g) [% d.Th.] | $H_0$ 4) (g) [% d.Th.] | D.-Rückstand (g) [% d.Th.] |
|---|---|---|---|---|---|---|---|---|
| 1 | $R^1 = CH_3$ | 3,5 | 8,1 | — | 4,8 | 234,4 | 6,4 | 1,0 |
| | $R^2 = C_2H_5$ | | 3,7 | — | 1,9 | 91,5 | 2,6 | 0,4 |
| 2 | $R^1 = CH_3$ | 5 | 7,4 | 1,0 | 1,5 | 235,9 | — | 2,2 |
| | $R^2 = CH_3$ | | 3,2 | 0,4 | 3,7 | 91,9 | — | 0,8 |
| 3 | $R^1 = C_2H_5$ | 5 | 7,2 | 1,0 | 9,7 | 235,4 | — | 1,1 |
| | $R^2 = C_2H_5$ | | 3,5 | 0,4 | 3,7 | 92,0 | — | 0,4 |
| 4 | $R^1 = i\text{-}C_3H_7$ | 5,5 | 4,3 | 1,2 | — | 225,2 | 21,2 | 1,3 |
| | $R^2 = i\text{-}C_3H_7$ | | 2,3 | 0,5 | — | 88,2 | 8,5 | 0,5 |

*Erläuterungen zu Tabelle 1*

1) Mono = Gemisch desaminierter Produkte „Monoamine"

2) $H_{12}$ = 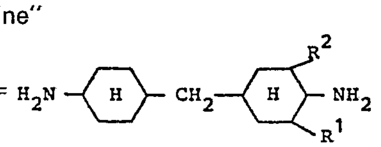

$H_{12}$-Dialkyl-MDA

3) $H_6$ = 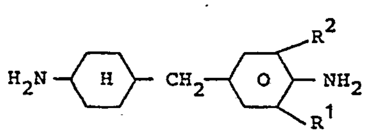

$H_6$-Dialkyl-MDA*

4) $H_0$ = 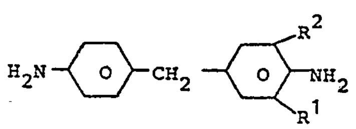

Dialkyl-MDA

* laut NMR-spektroskopischem Befund bestehen die teilhydrierten Diamine praktisch ausschliesslich aus Diaminen der angegebenen Struktur.

*Beispiel 5* (Vergleichsbeispiel):

Man beschickt einen 1,3 l Rührautoklaven mit 721,7 g (3,65 mol) 4,4'-Diaminodiphenylmethan, 72,2 g Ruthenium-Katalysator (5% Ru auf $Al_2O_3$), spült mehrmals mit Stickstoff und Wasserstoff und dosiert 72,2 g Ammoniak zu. Danach erhitzt man das Gemisch unter intensivem Rühren auf 125° C und hydriert bei 200 bar, bis nach ca. 10 h 10,95 mol Wasserstoff absorbiert sind. Man lässt den Autoklaven abkühlen, entspannt und nimmt den Autoklaveninhalt mit Methanol auf. Der Katalysator wird abfiltriert, gewaschen und das Rohprodukt einer fraktionierten Destillation unterworfen. Dabei gehen 332,6 g bei 120-135° C/0,1 mbar (Fraktion 1) und 380,6 g bei 135-150° C/0,1 mbar (Fraktion 2) über, während 20,6 g als Destillationsrückstand im Sumpf verbleiben. Laut gaschromatographischem Befund bestehen Fraktion 1 zu 72,4% aus 4,4'-Diaminodicyclohexylmethan und zu 25,5% aus 4-[4-Aminobenzyl]-cyclohexylamin und Fraktion 2 zu 9,0% aus 4,4'-Diaminodicyclohexylmethan und zu 86,3% aus 4-[4-Aminobenzyl]cyclohexylamin, so dass die Gesamtausbeute aus gewünschtem halbhydrierten Diamin 55,6% der Theorie beträgt.

*Beispiel 6:*

Analog Beispiel 1 werden 250 g (1,18 mol) 4,4'-Diamino-3-methyldiphenylmethan 12,5 h hydriert. Folgende Ausbeuten wurden gaschromatographisch ermittelt: 49,4 g (18,7% der Theorie) 4,4'-Diamino-3-methyldicyclohexylmethan,

198,7 g (77,3% der Theorie) 4-(4-Amino-3-methylbenzyl)cyclohexylamin, und 7,7 g (3,1% der Theorie) 4,4'-Diamino-3-methyldiphenylmethan.

Als Destillationsrückstand verbleiben 2,1 g (0,8% der Theorie) im Sumpf.

*Beispiel 7:*

In einem 0,7 l Rührautoklaven werden 226 g (1 mol) 4,2'-Diamino-3,5-dimethyldiphenylmethan und 22,6 g Ruthenium-Aluminiumodix-Trägerkatalysator (5% Ru) vorgelegt. Nach mehrmaligem Spülen mit Stickstoff und Wasserstoff werden 22,6 g Ammoniak zudosiert, das Gemisch auf 140° C erwärmt und unter Rühren bei 200 bar Wasserstoff hydriert, bis nach 4-stündiger Reaktionszeit 3 mol Wasserstoff absorbiert sind. Man stoppt die Reaktion durch Abstellen des Rührers, lässt auf Raumtemperatur abkühlen, entspannt den Autoklaven und nimmt das Produkt in Methanol auf. Der Katalysator wird nun abfiltriert, mit Methanol gewaschen und die vereinigten Lösungen einer Flash-Destillation unterworfen. Bei einer Siedetempertur von 114-152° C/0,015 mbar gehen 228,6 g Diamin über, das zu 93,0% aus 2-(4-Amino-3,5-dimethylbenzyl)cyclohexylamin, 6,3% 4,2'-Diamino-3,5-dimethyldicyclohexylmethan und 0,6% aus nicht umgesetztem Ausgangsprodukt besteht.

*Beispiel 8:*

Man beschickt einen 0,7 l Rührautoklaven mit 212 g (1 mol) 4,2'-Diamino-3-methyldiphenylmethan und 21,2 g Ruthenium-Aluminiumoxid-Trägerkatalysator (Ru-Gehalt 5%) und dosiert nach Spülen mit Stickstoff und Wasserstoff 21,2 g Ammoniak zu. Nun hydriert man unter Rühren bei einer Temperatur von 140° C und einem Druck von 200 bar, bis 3 mol Wasserstoff absorbiert sind. Dann lässt man den Autoklaven auf Raumtemperatur abkühlen, entspannt und nimmt das Rohprodukt in Methanol auf. Der Katalysator wird durch Filtration abgetrennt, mit Methanol gewaschen und das Produkt destillativ gereinigt. Bei einer Temperatur von 145-149° C/0,018 mbar destillieren 153,4 g 2-(4-Amino-3-methylbenzyl)cyclohexylamin, das laut gaschromatographischem Befund eine Reinheit von 98,4% aufweist.

## Patentansprüche

1. Verfahren zur Herstellung von ggf. Isomerengemische darstellenden und ggf. mit bis zu 35 Gew.-%, bezogen auf Gesamtgemisch, an den entsprechenden perhydrierten Diaminen und/oder mit bis zu 10 Gew.-%, bezogen auf Gesamtgemisch, an den entsprechenden unhydrierten Diaminen vorliegenden Diaminen der allgemeinen Formel

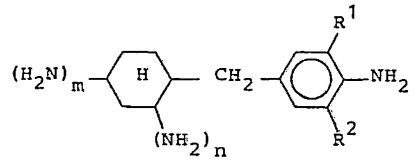

in welcher:

$R^1$ und $R^2$ jeweils gleich oder verschieden sind und Wasserstoff oder (ggf. verzweigte) Alkylgruppen mit 1 bis 12 Kohlenstoffatomen bedeuten mit der Massgabe, dass mindestens einer der Reste $R^1$ und $R^2$ für einen Alkylrest steht, und

m und n jeweils für 0 oder 1 steht, mit der Massgabe, dass die Summe m + n den Wert 1 ergibt, wobei im Falle von m oder n = 0 die freie Valenz durch Wasserstoff abgesättigt ist,

dadurch gekennzeichnet, dass man ggf. als Isomerengemische vorliegende, aromatische Diamine der Formel

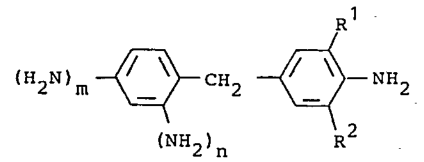

unter Anlagerung von 3 mol Wasserstoff pro Mol Diamin katalytisch hydriert, wobei

$R^1$, $R^2$, m und n die oben genannte Bedeutung haben.

2. Verfahren gemäss Anspruch 1, dadurch gekennzeichnet, dass man die Hydrierungsreaktion bei einer Temperatur von 20 bis 300° C und einem Druck von 20 bis 300 bar durchführt.

3. Verfahren gemäss Anspruch 1 und 2, dadurch gekennzeichnet, dass man die Hydrierung in Gegenwart von insgesamt 0,1 bis 10 Gew.-%, bezogen auf aromatisches Diamin, mindestens eines ggf. auf inerten Trägern vorliegenden Katalysators, ausgewählt aus der Gruppe bestehend aus Elementen der 8. Nebengruppe des Periodensystems der Elemente und katalytisch wirksamen anorganischen Verbindungen dieser Elemente, durchführt.

## Claims

1. Process for the preparation of diamines, which are optionally in the form of isomer mixtures and are optionally present together with up to 35% by weight, based on the total mixture, of the corresponding perhydrogenated diamines and/or with up to 10% by weight, based on the total mixture, of the corresponding unhydrogenated diamines, and which have the general formula

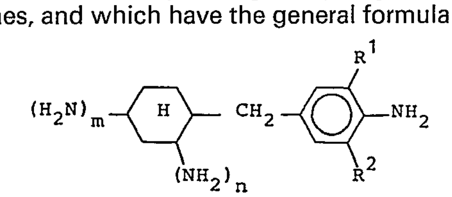

in which:

$R^1$ and $R^2$ are in each case identical or different and denote hydrogen or (optionally branched) alkyl groups with 1 to 12 carbon atoms, with the proviso that at least one of the radicals $R^1$ and $R^2$ represents an alkyl radical and m and n each represents 0 or 1, with the proviso that the sum of m + n is 1, the free valency being saturated by hydrogen in the case where m or n = 0, characterised in that aromatic diamines of the formula

which are optionally present in the form of isomer mixtures, are catalytically hydrogenated with the addition of 3 mol of hydrogen per mol of diamine, wherein

$R^1$, $R^2$, m and n have the abovementioned meaning.

2. Process according to Claim 1, characterised in that the hydrogenation reaction is carried out at a temperature of 20 to 300° C and under a pressure of 20 to 300 bar.

3. Process according to Claims 1 and 2, characterised in that the hydrogenation is carried out in the presence of a total of 0.1 to 10% by weight, based on aromatic diamine, of at least one catalyst which is optionally present on inert supports and which is selected from the group consisting of elements of the 8th subgroup of the periodic system of elements and catalytically active inorganic compounds of these elements.

## Revendications

1. Procédé de préparation de diamines, éventuellement à l'état de mélanges d'isomères et éventuellement accompagnées d'une proportion allant jusqu'à 35% en poids, par rapport au mélange total, des diamines perhydrogénées correspondantes et/ou d'une proportion allant jusqu'à 10% en poids, par rapport au mélange total, des diamines non hydrogénées correspondantes, de formule générale

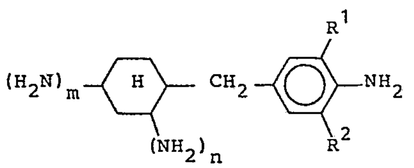

dans laquelle:

$R^1$ et $R^2$, ayant des significations identiques ou différentes, représentent chacun l'hydrogène ou un groupe alkyle (éventuellement ramifié) en $C_1$-$C_{12}$, étant spécifié qu'au moins un des symboles $R^1$ et $R^2$ représente un groupe alkyle, et

m et n sont égaux chacun à 0 ou 1, étant spécifié que la somme m + n est égale à 1, la valence libre existant dans le cas où m ou n = 0 étant saturée par l'hydrogène,

caractérisé en ce que l'on soumet à l'hydrogénation catalytique des diamines aromatiques éventuellement à l'état de mélanges d'isomères, de formule

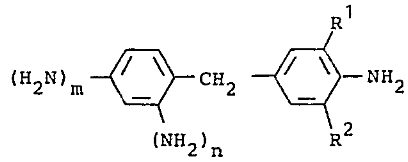

avec fixation par addition de 3 mol d'hydrogène par mole de diamine,

$R^1$, $R^2$, m et n ayant les significations indiquées ci-dessus.

2. Procédé selon la revendication 1, caractérisé en ce que la réaction d'hydrogénation est effectuée à une température de 20 à 300° C sous une pression de 20 à 300 bar.

3. Procédé selon les revendications 1 et 2, caractérisé en ce que l'hydrogénation est effectuée en présence d'une quantité totale de 0,1 à 10% en poids, par rapport à la diamine aromatique, d'au moins un catalyseur, éventuellement sur support inerte, choisi dans le groupe consistant en les éléments du huitième sous-groupe de la classification périodique des éléments et les composés minéraux de ces éléments possédant une activité catalytique.